Europäisches Patentamt

European Patent Office

Office européen des brevets

(19)

(11) **EP 1 278 348 A1**

(12) **EUROPEAN PATENT APPLICATION**

(43) Date of publication:
    **22.01.2003 Bulletin 2003/04**

(51) Int Cl.7: **H04L 29/06**, H04L 12/56,
    H04Q 7/22

(21) Application number: **01117279.8**

(22) Date of filing: **17.07.2001**

(84) Designated Contracting States:
    **AT BE CH CY DE DK ES FI FR GB GR IE IT LI LU
    MC NL PT SE TR**
    Designated Extension States:
    **AL LT LV MK RO SI**

(71) Applicant: **ALCATEL**
    **75008 Paris (FR)**

(72) Inventors:
    • **Yang, Mingguey Michael**
      **Plano, Texas 75024 (US)**
    • **Magret, Vincent**
      **Dallas, Texas 75240 (US)**

(74) Representative: **Cabinet Hirsch**
    **34, Rue de Bassano**
    **75008 Paris (FR)**

(54) **Long-lived TCP connection using ICMP messages in wireless mobile communications**

(57)     A TCP connection provides a fast suspend-resume operation to deal with the problem of frequent disconnections of mobile users. When a mobile user is temporarily disconnected, TCP quickly suspends all data transmission between the mobile user and the fixed host. When the mobile user is reconnected, TCP resumes all data transmission between the mobile user and the fixed host.

The path between two users in a cellular communication system (mobile host and fixed host) is broken into two paths. First, the data is sent from the mobile host to a supervisor host. Next, the data is sent from the supervisor host to the mobile host. When a link disconnect occurs, the supervisor host closes the fixed host's window gradually, from its left window edge, by allowing the fixed host to continue to transmit the rest of TCP segments within its current window. The mobile host uses an ICMP probe request and a probe response failure timer to determine if the link is broken. The supervisor host uses an ICMP suspend request suspension timer to detect a link failure.

When the supervisor host receives the ICMP probe request, it determines that the link is operational and that the connection can be resumed. The supervisor host will forward stored TCP segments to the mobile host. In addition, the supervisor host sends an ICMP probe response message to the mobile host. As a result, the connection is resumed with the same characteristics as prior to the link failure.

FIG. 7

**EP 1 278 348 A1**

## Description

FIELD OF INVENTION

This invention is related to the field of wireless data communication. The market of connected handheld devices and Internet capable cellular phones is extremely popular and is growing at a pace rarely seen. The Transmission Control Protocol (TCP) is used to control the flow of data in most wireless devices to provide end-to-end data transfer from a source to a destination. TCP implements a full-duplex path between two users and transfers data over a TCP connection or data link. It sends data from transmit buffers in the sending system (or fixed host or sending host) to receive buffers in the destination system (or mobile user or mobile or receiving host). Indeed TCP is used by most end-user applications (WEB browser, File transfer, E-mail, Data base access...). One drawback to using the TCP protocol is that TCP was not initially designed to cope with some of the extreme conditions encountered in wireless networking such as frequent disconnections. The instant invention provides a solution to the problem of frequent disconnections which may dramatically reduce system performance and increase the cost of data transfer.

BACKGROUND OF INVENTION

The development of portable communication devices in recent years had made mobile computing more and more popular. Through a wireless network (e. g. cellular network), a mobile user is able to access the services provided by the Internet (e.g. e-mail, WWW) "anywhere, anytime". However, a mobile user may experience temporary disconnections on a frequent basis due to user mobility and the deficiencies of wireless communication. One cause of frequent disconnection is physical obstacles, such as buildings or tunnels, which block radio signals.

TCP is the most widely used standard transport protocol in the Internet. It provides reliable end-to-end data transmission on wired, fixed networks by using retransmission timers and two flow control windows to control data transmission. The window at the sender represents the amount of data the sender has been granted (by the receiver) to send. The window at the receiver indicates the amount of data the receiver is willing to accept. The sender, within the limit of its window, can transmit a number of TCP segments to the receiver without acknowledgement from the receiver. The receiver does not have to immediately acknowledge incoming TCP segments. Instead, it may wait a while and then send a cumulative acknowledgement for a number of TCP segments received. Each acknowledgement from the receiver contains two pieces of information: the next expected data segment and an additional window of data granted to send.

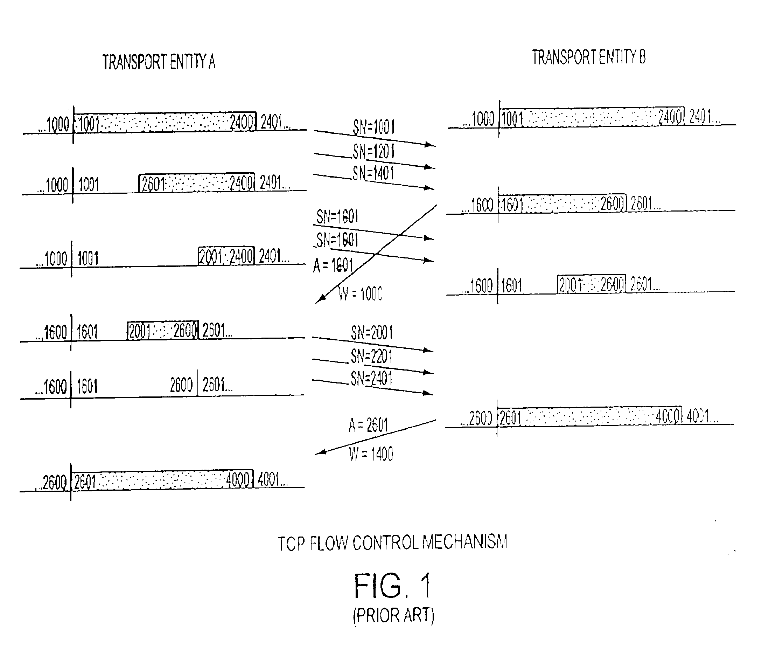

Figure 1 shows an example of TCP flow control. In the example, transport entity A is the sender and transport entity B is the receiver. The flow control window in both sender and receiver are shown as boxes. The size of each TCP segment that is sent is 200 octets. The parameter SN shown with each sent segment is the sequence number of the first data octet in the segment. The acknowledgement sent from the receiver contains the sequence number of the next expected octet (shown as the parameter A) and an additional amount of octets granted to send (shown as the parameter W).

When the sender sends a segment, it shrink its window from the left edge (i.e., moves it to the right). Similarly, when the receiver receives a segment, it also shrinks its window from the left edge (i.e., also moves it to the right). When the receiver acknowledges the received segment by granting additional window to the sender, it extends its window from the right edge (i.e., moves it to the right). On the other hand, when an acknowledgement is received with additional window granted, the sender also extends its window from the right edge (i.e., moves it to the right also).

For each TCP segment sent, the TCP sender sets a retransmission timer with a timeout period, which is a value proportional to an estimated round-trip time between the sender and the receiver. When the acknowledgement of a segment is not received within its timeout period (i.e., the timer has expired), the sender will retransmit the same segment.

TCP was designed for use with wired, fixed networks with the assumptions that the wired link has very low bit error rates and that temporary disconnections rarely happen. Therefore, it is assumed that any data lost during transmission is due to network congestion. With network congestion, data is lost when the incoming buffers of some (congested) routers are overflowed. These routers have to discard incoming data packages unless vacancies can be found in the buffers. For a minor network congestion, i.e., where only one or two segments or acknowledgements are lost, TCP will invoke congestion control mechanisms such as Fast Retransmit and Fast Recovery, based on duplicated acknowledgements, to retransmit the lost segment(s) as early as possible and lower the sender's transmission rate, respectively. For a major network congestion, TCP will invoke congestion control mechanisms such as Slow-Start and Exponential Retransmission Timer (RTO) Backoff to help mitigate the situation of network congestion by dramatically reducing the data transmission rates of senders.

The Slow-Start mechanism is used during start-up and network congestion. When a new connection is opened, the TCP entity at the sender will set the size of its congestion window to one TCP segment. The size of the congestion window is increased by one segment each time an acknowledgement is received. The sender is able to open up its congestion window until it reaches the size granted by the receiver through acknowledgements or a threshold (slow-start threshold) value which enables a congestion avoidance algorithm. As soon as the congestion window reaches the value transmitted by the receiver, the normal flow control mechanism is applied (i.e. the sender's transmission rate is controlled by the offered window size specified in the incoming acknowledgements).

When network congestion is detected (i.e. a time-out occurs), the slow-start threshold is set to half the size of the current congestion window. Then, the size of the congestion window is set to one segment and the Slow-Start process is performed. When the congestion window grows to the size equal to the slow-start threshold, the congestion window will only grow by one segment for each round-trip time, instead of each acknowledgement received. This is the congestion avoidance algorithm. If network congestion continues, then retransmission time-out may happen again and again. In this case, repeat applications of the Slow-Start process will force the congestion window of the sender to stay in a very small size, perhaps one or two segments. Since the transmission rates of all senders are low, the senders are not able to inject too many traffic loads into an already congested network to worsen the situation.

When a TCP sender (or sending host or fixed host) times out on a segment, it has to retransmit that segment. Since the timeout is probably due to network congestion, maintaining the same timeout period to repeatedly inject traffic into the congested network may not be a good practice. A more reasonable policy is to increase the retransmission time-out (RTO) period each time the same segment is retransmitted. This is referred to as a *backoff* process. A simple technique for implementing RTO backoff is, for each retransmission, to multiply the current RTO for a segment by a constant value:

$$RTO_{new} = q \times RTO_{pre}$$

This equation can be restated as:

$$RTO_n = q^{n-1} \times RTO_1 \qquad \forall\, n \geq 1$$

As a result, the RTO actually grows exponentially with each retransmission. This mechnism is thus referred to as the *exponential retransmission timer backoff*. The total timeout value is commonly set as 9 minutes, i.e., the TCP sender will abort the connection when it has unsuccessfully retransmitted the same segment for 9 minutes.

Both of these TCP congestion control mechanisms, slow-start and exponential RTO backoff, work fine to mitigate network congestion. However, when TCP is used in mobile networks, mobile users will experience a serious drop in the performance of their data communications due to problems such as bit errors and frequent disconnections. Furthermore, because the TCP sender cannot distinguish the causes of data lost, either due to network congestion or to a problem with the wireless link, it will invoke congestion control mechanisms in either case.

In the case of a temporary disconnection, when the mobile user regains connection, he/she might experience a serious performance drop due to the invocation of the slow-start process and a communication idle due to the effect of the exponential RTO backoff. Even worse, the TCP connection of the mobile user might be terminated if the temporary disconnection lasts longer than 9 minutes.

When a failure on the wireless link occurs (due to a lack of resource, geographical configuration, weather interference...), a TCP connection will continue to pursue its attempt to transmit the data to the destination. Not only is that useless, but it will also produce deterioration of the connection parameters managed by the TCP connection. This will increase the time needed to complete the transfer. Ultimately, the connection will be closed and the user will have to restart its transfer from the beginning, as most applications do not handle such situations.

Several protocols, such as Snoop, I-TCP, and M-TCP, have been proposed to improve TCP performance in wireless mobile communications. Most of them, such as the Snoop and I-TCP protocols, are designed to provide an efficient recovery mechanism for lost packets in wireless links, but do not deal with the problem of frequent disconnections, especially lengthy disconnections, of mobile users. Therefore, these protocols do not have the feature of suspending (or resuming) TCP senders from (or to) transmitting data when needed. They allow the sender to keep transmitting data to the mobile host while it is disconnected. The sent data is buffered at a network node (e.g. base station) waiting to be forwarded to the mobile user when possible. These protocols work fine when the mobile user is disconnected for a very short period of time. However, when the disconnection lasts too long (e.g. a few seconds), they may not be able to either avoid the TCP sender from invoking TCP congestion control mechanisms (as in the case of Snoop) or avoid the buffers from becoming overloaded (as in the case of I-TCP).

## SNOOP

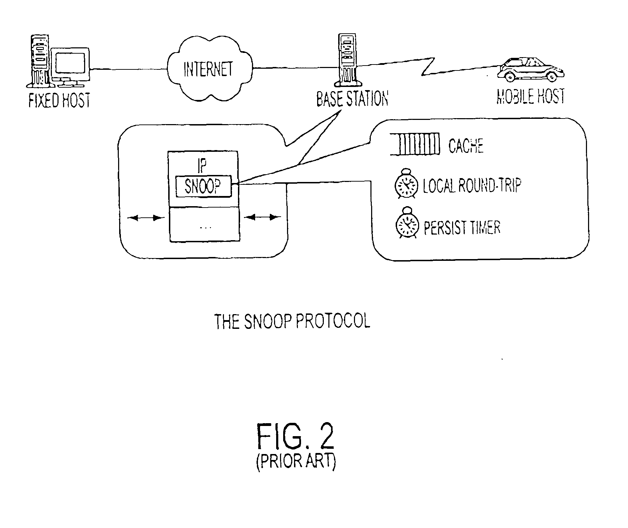

The Snoop protocol was proposed to improve end-to-end performance on networks with wireless links without changing existing TCP implementations at hosts in the fixed network and without recompiling or relinking existing applications. A snoop module, i.e., a set of modifications to the network-layer (i.e. IP) software, is put at the base station to monitor every IP packet that passes through the connection in either direction, as shown in Figure 2. The snoop module maintains a cache of unacknowledged TCP segments sent from the fixed host and keeps track of acknowledgements sent from the mobile host. It has a local round-trip timer, much like TCP, and retransmits unacknowledged segments based on this timer. In addition, it maintains a persist timer that triggers a retransmission every 200 ms when there are unacknowledged segments in the cache and there has been no activity either from the sender or receiver.

The persist timer is used to trigger a local retransmission when there are unacknowledged packets in Snoop's cache (or local retransmission buffer) and there has been no activity either from the sender (a fixed host) or receiver (a mobile host) for 200 ms. When the persist timer timeouts, Snoop retransmits the oldest (and unacknowledged) packet in this cache to the receiver. The purpose is to remedy the case where packets previously sent through a noisy wireless link were dropped by the receiver. As a result, the receiver (after receiving a packet without errors) can send an ACK back to the sender to prevent the sender from wrongly invoking congestion control mechanisms. The snoop module maintains end-to-end TCP semantics because it forwards acknowledgements generated by the mobile host.

The main purpose of the Snoop protocol is to hide the data lost in the wireless link from the fixed host (the sender or sending host) by performing local retransmissions to the mobile host (the mobile or receiving host). This will prevent the TCP entity at the fixed host from triggering congestion control mechanisms on this lost data. But Snoop does not work when a mobile host is disconnected for a lengthy period of time because it does not stop the fixed host from transmitting data segments. When the mobile host is temporarily disconnected, the snoop module keeps caching incoming packages from the fixed host and waits for the chance to forward them to the mobile host. If the disconnection lasts too long, then the invocation of TCP congestion control mechanisms at the fixed host is inevitable since the TCP sender at the fixed host will timeout those segments sent to the disconnected mobile host. In the worst case, the fixed host will close the connection. If the link is broken, the Snoop module cannot alert the server of the current situation. Thus the server will first apply the exponential back-off algorithm and, after several attempts, will close the connection.

## M-TCP

M-TCP uses an architecture with a three-level hierarchy. The elements in these levels are (from the lowest to the highest level): mobile hosts, mobile support stations, and a supervisor host. A TCP connection between a fixed host and a mobile host is split into two parts at the supervisor host (e.g. mobile switching center), which is connected to several mobile support stations (e.g. base stations). It provides both with access to the Internet. The main reason for splitting the TCP connection at a supervisor host, instead of a mobile support station or base station, is to get more efficient roaming controls and provide better mobility supports to mobile users.

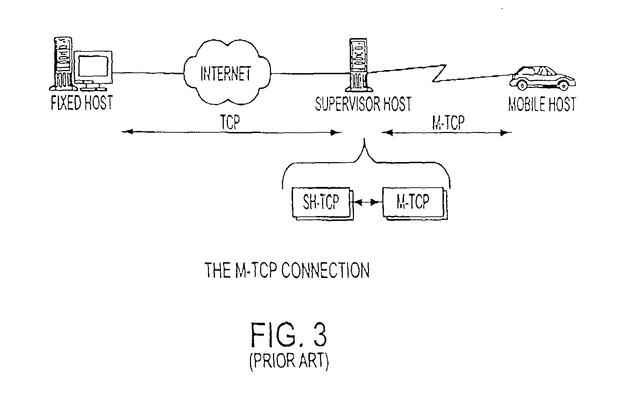

Figure 3 shows the M-TCP connection. The fixed host uses regular TCP to send data to a supervisor host (or supervisory host), while the supervisor host uses M-TCP, a version of TCP, for delivering data to the mobile host. SH-TCP, the TCP client at the supervisor host, receives segments sent by the fixed host and passes them to the M-TCP client (at the supervisor host) for delivery to the mobile host. Acknowledgements sent by the mobile host are received by the M-TCP client at the supervisor host and then forwarded to SH-TCP for delivery to the fixed host.

### The Suspend-Resume Operation of M-TCP

The M-TCP protocol provides a suspend-resume operation on the TCP connection between the fixed and mobile hosts. The approach it takes is to *choke* (suspend) the fixed host when the mobile host is disconnected, and allow the fixed host to transmit (resume) at full speed when the mobile host reconnects, by manipulating the size of the congestion window of the fixed host. To ensure that the supervisor host can suspend the transmission of the fixed host, the supervisor host (i.e., SH-TCP), in normal (connected) situation, forwards the acknowledgements sent by the mobile host to the fixed host, but always keeps one last byte (or octet) unacknowledged. Let's call the unacknowledged byte *UnAckByte*. Its usage is explained in the following:

### Disconnection (Suspension)

When a mobile host is temporary disconnected, the supervisor host (M-TCP client) will detect the situation since it stops receiving acknowledgements from the mobile host for data transmitted after *UnAckByte*. The supervisor host (SH-TCP) sends an acknowledgement for *UnAckByte* to the fixed host. The acknowledgement contains a TCP window size update that sets the fixed host's window size to 0. After receiving the window update, the fixed host is forced into *persist* mode and stops transmitting data. While in the persist mode, the fixed host will not suffer from the retransmission timeouts and will not exponentially backoff its retransmission timer. Furthermore, it will keep (and never stop) sending window probes to the mobile user until the window opens up or the application using the connection is terminated.

When M-TCP at the mobile host is notified (by the communication hardware) that the connection to its mobile support station has been lost, it freezes all M-TCP timers so that it will not invoke congestion control from its own side.

### Reconnection (Resumption)

When the mobile host is reconnected, M-TCP at the mobile host unfreezes M-TCP timers to allow normal operation to resume and retransmits the last acknowledgement (i.e., an acknowledgement that contains the sequence number of the highest byte it received thus far) to the supervisor host. This acknowledgement has a special mark indicating that it is a reconnection acknowledgement.

The M-TCP client at the supervisor host receives the reconnection acknowledgement from the mobile host and responds by informing SH-TCP that the mobile host is reconnected. SH-TCP then sends an acknowledgement to the fixed host and reopens its window. With the reopened window, the fixed host can start transmitting additional data at full speed.

The main advantage of the M-TCP protocol is that it provides a TCP suspend-resume operation which avoids the invocation of congestion controls on both fixed and mobile hosts.

The main drawback of M-TCP is that the action of shrinking the fixed host's congestion window to 0 (at the moment a disconnection is detected) is not fully supported (or accepted) by all TCP implementations. According to the section 4.2.2.16 of Internet Engineering Task Force Request For Comments (IETF RFC) 1122, "Requirements for Internet Hosts - Communication Layers," October 1989, hereby incorporated by reference, a TCP receiver SHOULD NOT shrink its window, i.e., move its right window edge to the left. The meaning of shrinking a window from its right edge is explained as follows.

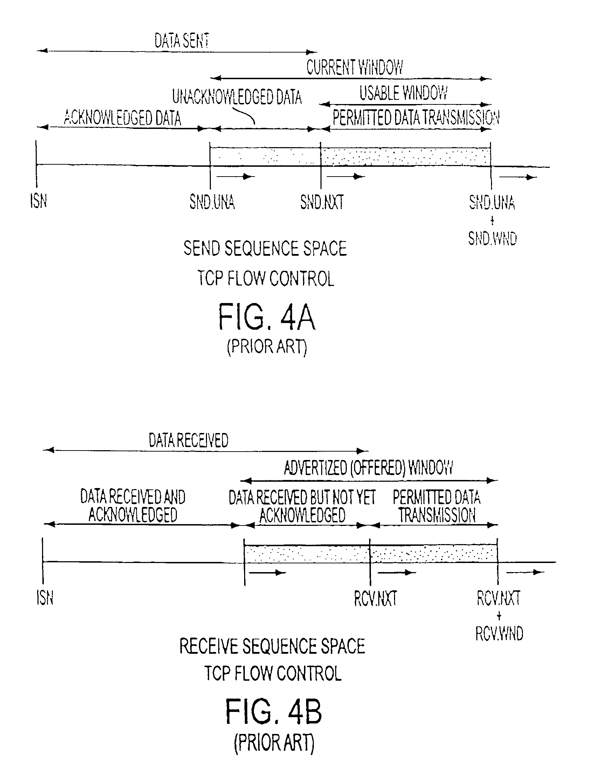

The TCP sender and receiver work together to control data transmission by using sliding windows, as shown in Figure 4. These two windows work cooperatively, i.e., you cannot change one without affecting another. Detail meanings of the following terms can be found in IETF RFC 793, Transmission control protocol (TCP), Sept. 1981, hereby incorporated by reference:

ISN -      Initial sequence number
SND.UNA -    send unacknowledged
SND.NXT -    send next
SND.WND -   send window
RCV.NXT -    receive next
RCV.WND -   receive window

If the receiver is able to offer the same window size to the sender with each ACK, then the receiver and sender have the same window size at all times. However, at any particular moment the edges of these two windows may not be the same (i.e., having the same sequence number) since the receiver adjusts its window before sending out the ACK with the new window update and the sender adjusts its window after receiving the window update. If the receiver changes the offered window size from time to time, then the sizes (and edges) of the two windows will be synchronized only after the sender receives the window update and adjusts its window accordingly.

Whenever the sender receives an ACK, it shrinks its window by moving SND.UNA to the right to the end of the data segments being acknowledged. If the ACK contains a window update that grants additional window to the sender, then the sender increases its window by moving the right window edge to the right, to SND.UNA + SND.WND, where SND.WND is the offered window size specified in the ACK. When there is an incoming data segment, the receiver advances RCV.NXT (to the right) over the data accepted, and adjusts RCV. WND (i.e., the additional amount of data the receiver is willing to accept) as appropriate to the current buffer availability.

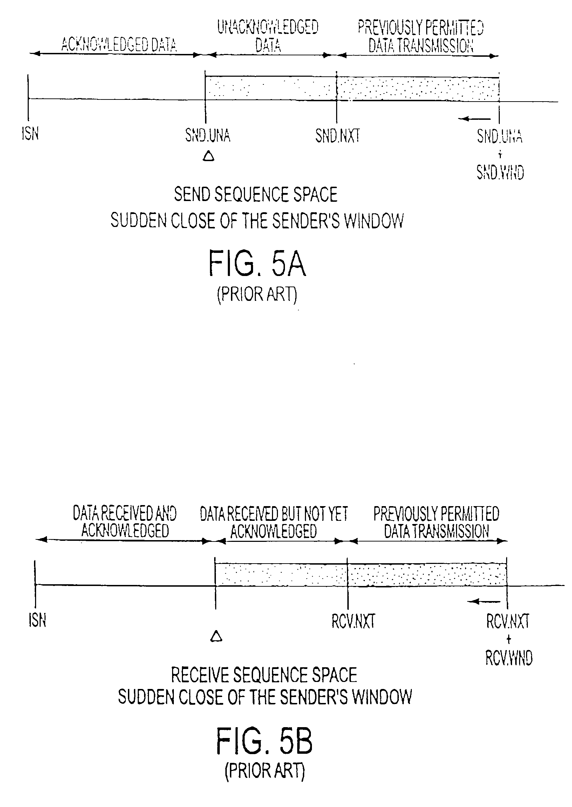

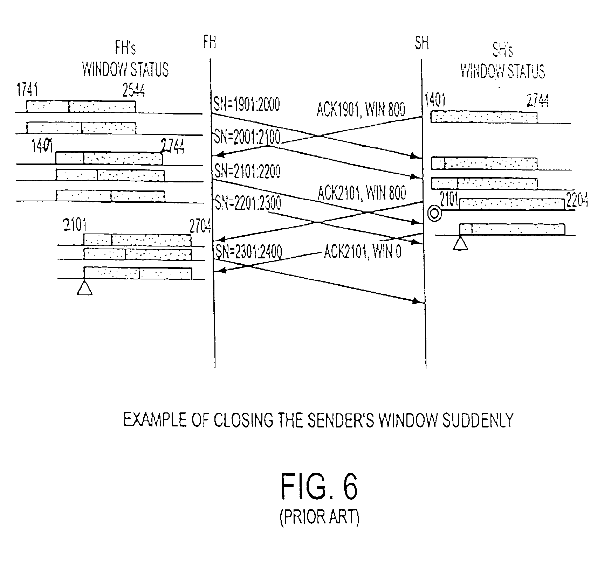

If the receiver wants to immediately close the sender's window by sending an ACK with an offered window size equal to 0, then, as shown in Figure 5, both receiver's and sender's windows are closed from their right window edges to their left window edges (marked with triangles). Figure 6 shows an example of such approach. Temporary disconnection happens after SH forwards the ACK (ack = 2101, win = 800) to FH.

According to IETF RFC 1122 (section 4.2.2.16), many TCP implementations become confused if the window shrinks from the right after data has been sent into a larger window of the receiver. As a result, a TCP sender may ignore a window update with a smaller window than previously offered if neither the sequence number, nor the acknowledgement number is increased.

M-TCP is not compliant with an Internet RFC 1122, because it closes the receiving window in a single shot. The informational message sent by the supervisor host will be discarded by most implementations of TCP and the sender will apply the exponential back-off algorithm and eventually close the connection.

Since the suspension operation of M-TCP violates the requirements of IETF RFC 1122, M-TCP may not work with many TCP implementations unless it can be sure that the TCP sender (i.e., the fixed host) will behave accurately without ignoring the request of shrinking the window from the right edge.

SUMMARY OF THE INVENTION

The invention comprises a method and apparatus for improving performance in wireless data communication between a fixed host and a mobile by detecting a link disconnect between the mobile and the fixed host and then fast suspending transfer of data by closing the fixed host's flow control window gradually to zero. The window is gradually closed by allowing the fixed host to transmit any remaining data segments within its current window for storage in a retransmission buffer at a supervisory host. In addition, data transfer is fast resumed when the link is reconnected by updating the flow control window of the fixed host and forwarding the data segments stored in the supervisory host's retransmission buffer to the mobile. Furthermore, a reopen timer is used to control the reopening of the fixed host's flow control window.

In another embodiment, the invention comprises a cellular communication system for suspending and resuming operation on a TCP connection between a fixed and a mobile host, comprising a mobile switching station operably connected between the fixed host and the mobile host.

In still another embodiment, the invention comprises a method and apparatus for fast suspending data transfer between a mobile and a fixed host. The mobile detects a link disconnect by sending at least one probe request determining whether it receives a response before the expiration of a probe response failure timer. Furthermore, upon detection of a link disconnect, the mobile puts at least one connection into a suspend mode and disables at least one timer. In addition, the mobile monitors link status changes by periodically sending probe requests. Furthermore, a supervisor host sends at least one suspend request to a fixed host when a suspension timer expires. In addition, the supervisor host sends at least one unreachable host message to the fixed host after a plurality of said at least one suspend requests have been sent. At least one activity is resumed when the mobile receives at least one probe response.

BRIEF DESCRIPTION OF THE DRAWINGS

Figure 1 shows an example of TCP flow control in which transport entity A is the sender and transport entity B is the receiver.

Figure 2 shows the architecture of the snoop protocol.

Figure 3 shows an example of a M-TCP connection.

Figure 4 shows an example of flow control in which the TCP sender and receiver work together to control data transmission by using sliding windows.

Figure 5 shows a sudden close of the sender's window by moving its right window edge to its left window edge.

Figure 6 shows an example of TCP flow control in which the sender's window is closed suddenly.

Figure 7 shows the LL-TCP architecture.

Figure 8 shows an example of LL-TCP flow control.

Figure 9 shows an example of LL-TCP flow control in which the sender's window is closed gradually.

Figure 10 illustrates a preferred embodiment of the suspend phase at the mobile host and fixed host.

Figure 11 illustrates a preferred embodiment of the resuming phase.

Figure 12 illustrates a preferred embodiment of the destination unreachable message.

Figure 13 is a preferred embodiment of an ICMP suspend message format.

Figure 14 is a preferred embodiment of an ICMP resume and response format.

DETAILED DESCRIPTION OF THE INVENTION

The solution proposed is called the *Long-Lived TCP* (*LL-TCP*) *Connection.* It operates in both the transport layer and the network layer of the TCP/IP protocol.

**LL-TCP**

LL-TCP addresses the problem of connectivity disruptions by allowing the connection to be brought to an idle state when a failure is detected on the wireless link. In addition, it acts on both sides of the connection. The reason for this is that most applications which use TCP include a request-response mechanism which allows both sides to act as both receiver and sender. (The following references are incorporated by reference: John Postel, Internet Control Message Protocol (ICMP RFC 792), September 1981 and Charles Perkins, Ipv4 Mobility Support, October 1996 (Mobile IP RFC2002)).

To achieve this goal, it is desired to have a solution to the problem with the following features:

- When disconnected, suspending all data transfers. When a mobile user is temporarily disconnected, all data transmission between the mobile user and another communicating party are suspended. During the disconnection, any attempt to transmit data from another communicating party (e.g., fixed host) is in vain and wastes network bandwidth that otherwise can be used by other communications.
- When re-connected, fast resuming all data transfers.
  When a mobile user is re-connected, all data transmission between the mobile user and another communicating party are resumed immediately at their original speeds. This means that the mechanism can reduce or avoid the effect of TCP congestion control.
- No change on the fixed host.
  One of the purposes of providing a long-lived TCP connection is to hide the fixed host from the existence of wireless mobile connection. In addition, some fixed hosts (such as found in a LAN) may only communicate with other fixed hosts and not be willing to modify their TCP entities for a feature that they might never use. For the purpose of fast deployment of the new feature, there should be no change on the TCP of the fixed host.

- Same behavior on long and short disconnection. It is impossible to predict how long a mobile user will be temporarily disconnected. The solution should have the same behavior whether a mobile user is temporarily disconnected for 3 seconds or 3 hours. But there should be an upper limit on the longest allowable temporary disconnection since an unlimited length of temporary disconnection may be impractical. For example, if a disconnection has lasted more than a few hours, then the mobile user may already move out of coverage (e.g. flying into another country).

The term supervisor host refers to a host located at the connection point between the wireless infrastructure and the wired infrastructure. The term fixed host refers to any hosts located on the wired part of the network. The term mobile host refers to the mobile terminal.

The basic idea of the fast-resume phase is to start sending acknowledgements to the fixed host granting authorization to send new segments by increasing the value of the fixed host's congestion window. Either all the buffered segments are sent and acknowledged or the buffer is partially emptied before sending the first acknowledgement to the fixed host. The first technique allows the fixed host to regain connectivity with the same characteristics as before the link failure. With the second technique, the fixed host will get back to the same connection characteristics within several phases. Each phase grants to the fixed host a portion of the receiver window value as transmitted before the link failure. When all the buffered segments have been transmitted and acknowledged, LL-TCP then resumes its normal operation mode.

LL-TCP provides a mechanism by which a server can be put into a persist mode as described in M. Yang, Another Solution of Long-Lived TCP Connection in Wireless Mobile Communication, June 1999 (ref: 8DB 00304 0064 QRZZA), hereby incorporated by reference. Persist mode is a standard feature of the TCP protocol and used by a TCP sender. When a TCP sender's window size becomes 0, it goes into the persist mode. In this mode, the TCP sender keeps sending a window probe to the TCP receiver periodically to request a window update (i.e., an ACK with offered window size greater than 0), in case the a window update was lost on the way to the TCP sender. The TCP sender will continue sending window probes, until its window is opened again. In addition, the TCP sender cannot transmit any data segment in this mode because its window size is 0. Also, all its timers (e.g. retransmission timers) are stopped. LL-TCP uses this feature to suspend the TCP sender, when necessary.

The added value of LL-TCP is that it defines two new operations: fast-suspend and fast-resume. When the suspension timer expires, the supervisor host triggers the fast-suspend algorithm.

To comply with the requirement of IETF RFC 1122, the supervisor (or supervisor host, supervisory node, or supervisory host) does not close the fixed host's (i.e., the sender's or sending host's) window immediately by moving its right window edge to the left when the mobile host (mobile or mobile user) is temporarily disconnected. Instead, the supervisor closes the fixed host's window gradually, from its left window edge, by allowing the fixed host to continue to transmit the rest of TCP segments within its current window, i.e., within its *usable window.*

Therefore, an additional feature of LL-TCP is that it closes the TCP sender's window gradually while operating in the fast-suspend phase. For each packet (i.e., TCP segment) held in the local retransmission buffer, LL-TCP acknowledges each packet on behalf of the mobile node. Each acknowledgement is sent along with a receiving window advertisement option. The value advertised is reduced by the amount of bytes buffered in the supervisor host. This principle is also applied on each new packet received from the fixed host. The receiver window will be decreased by the amount of bytes in the packet. When the fixed host's window becomes null, the TCP connection at the fixed host will be transferred into persist mode. This mode freezes the connection (all timers are suspended and no more data segments are sent).

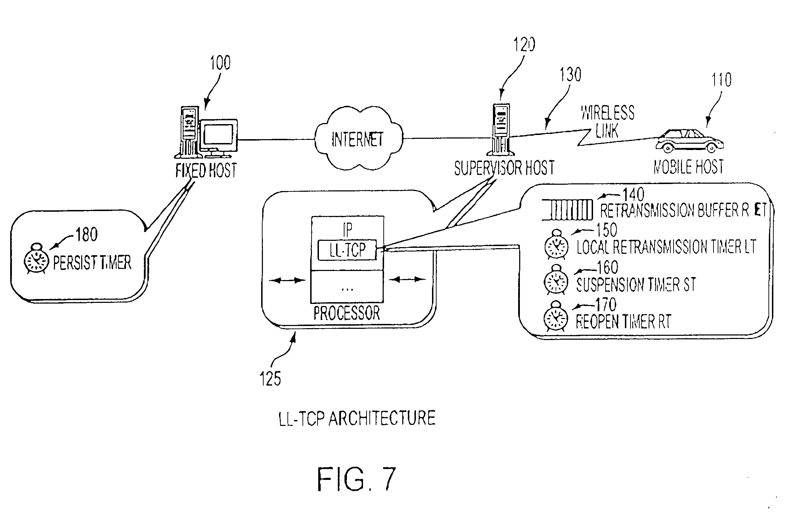

Referring now to the figures, in which like numerals refer to like elements, the present invention is shown. The architecture of LL-TCP is shown in Figure 7. A fixed host (FH) 100 and a mobile host (MH) 110 communicate with each other using conventional TCP. A routing node that resides in the communication path between the FH 100 and the MH 110 is selected as the supervisor host (SH) 120. SH 120 should be only one or two hops away from MH 110. So, the SH 120 can be seen as connecting to the FH 100 with a wired link and connecting to MH 110 with a wireless link 130. The routing code of SH 120 is modified by adding LL-TCP to monitor and coordinate packets passing through the SH 120 in either direction.

A processor 125 executes the LL-TCP protocol. In addition, LL-TCP uses a retransmission buffer (RET) 140 to cache TCP segments sent from the FH and not yet acknowledged by the MH 110. A local retransmission timer (LT) 150 is used to control the local retransmission of a segment that has not been acknowledged for a period of time. A suspension timer (ST) 160 is used to decide the start of suspension operation. Its value should be greater than that of LT 150. A reopen timer (RT) 170 is used to control the reopening of the window of the TCP sender, i.e., FH 100, which will be explained later.

## The Normal Operation

Under normal situation, i.e., when the MH 110 is connected, LL-TCP adds every incoming TCP segment from the FH 100 to the RET 140 and passes the segment on to the routing code which performs the normal routing functions. LL-TCP also keeps track of all the acknowledgements (ACKs) sent from the MH 110. The TCP segments in the retransmission buffer RET 140 are used for local retransmission, i.e., a TCP segment that is lost in wireless link can be retransmitted immediately by LL-TCP, provided the segment is in the buffer. This local retransmission is usually a lot faster than retransmission from the FH 100. This is described in Ratnam, K.; Matta, I., "WTCP: an efficient mechanism for improving TCP performance over wireless links", *Proceedings of the Third IEEE Symposium on Computers and Communications* (*ISCC '98*), Page(s): 74 -78, 1998, hereby incorporated by reference, and Karunaharan Ratnam and Ibrahim Matta, "Effect of Local Retransmission at Wireless Access Points on the Round Trip Time Estimation of TCP", *Proceedings of the 31st Annual Simulation Symposium*, 1998, pp. 150-156, also hereby incorporated by reference.

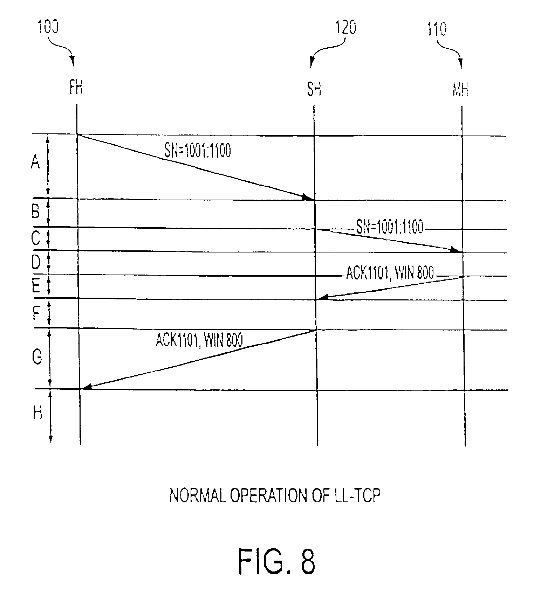

Figure 8 shows an example of the normal operation of a LL-TCP connection. Suppose that the TCP segment (or frame) size is 100 bytes and the advertised (or offered) window size from the receiver is 800 bytes (i.e., 8 segments). The actions that occur between the time FH 100 sends a segment and the time FH 100 receives the acknowledgement of the reception of the segment are as follows:

Time A: FH 100 sends to MH 110 a TCP segment containing data with sequence numbers between 1001 and 1100.

Time B: SH 120 receives the segment. LL-TCP buffers the segment into the retransmission buffer RET 140 and passes it to the routing code for forwarding. The local retransmission timer LT 150 is set on for this segment.

Time C: SH 120 forwards the segment to MH 110.

Time D: MH 110 receives the segment and buffers it for the application that uses the TCP connection. The TCP entity at MH 110 may wait a while before sending a delayed, cumulative acknowledgement for more than one segment received.

Time E: MH 110 sends to FH the acknowledgement ACK of the segment. The ACK contains information of the next expected sequence number of data and the "offered window" (i.e., the granted window size to the sender), represented in the form of (ack S, win W). The offered window corresponds to the amount of buffer space available in the receiver (MH) 110. This correspondence is not necessary exact.

Time F: SH 120 receives the ACK. LL-TCP deletes the acknowledged segment from the retransmission buffer RET 140, since the segment is no longer needed for local retransmission. Then, LL-TCP stores the ACK as the most current ACK for later usage and passes the ACK the routing code for forwarding it to FH 100.

Time G: SH 120 forwards the ACK to FH 100.

Time H: The TCP entity at FH 100, i.e. the TCP sender, receives the acknowledgment, adjusts its "*usable window*" and sends additional segments that are in the usable window. The TCP sender uses the offered window to compute its "*usable window*", which is the offered window minus the amount of outstanding unacknowledged data. The usable window is less than or equal to the offered window, and can be much smaller as described in IETF RFC 813, Window and Acknowledgement Strategy in TCP, 1982, hereby incorporated by reference.

## The Fast Suspend-Resume Operation

An LL-TCP connection provides a fast suspend-resume operation to deal with the problem of frequent disconnections of mobile users. When a mobile user is temporarily disconnected, LL-TCP quickly suspends all data transmission between the mobile user and the fixed host. When the mobile user is reconnected, LL-TCP resumes all data transmission between the mobile user and the fixed host.

## The Fast Suspension Operation

When LL-TCP detects that the MH 110 is temporarily disconnected, i.e., when the ST timer expires, it invokes the suspension operation on the sender, i.e., FH 100. LL-TCP first sets up a window to simulate the advertised window of MH 110 by using two pieces of information on the most current ACK from the MH 110: the next expected byte and the offered window size. Then, LL-TCP keeps storing incoming segments from the FH 100 into the retransmission buffer RET 140 so that they can be forwarded to the MH 110 when it is reconnected.

LL-TCP will acknowledge these received segments, on behalf of the MH 110, without granting anymore window to the FH 100. If the previous ACK issued by LL-TCP was (ack = $s$, win = $w$) and the last byte of data received by LL-TCP was of sequence number $s - 1$, then LL-TCP acknowledges an incoming segment containing $m$ bytes of data ($m < w$) without granting additional window to the FH 100 by issuing the acknowledgement of (ack = $s + m$, win = $w - m$).

To prevent the FH 100 from timing out and hence wrongly invoking its TCP congestion controls, e. g. slow start, to imperil the performance of TCP after MH 110 is reconnected, LL-TCP has to acknowledge each incoming TCP segment in time. LL-TCP can perform the acknowledgements in one of the following ways:

> 1. It immediately acknowledges each incoming segment.
> 2. It immediately acknowledges every other incoming segment, to comply with the requirement of IETF RFC 1122.

To help the TCP sender (FH) 100 in calculating the estimated round-trip time (and setting its retransmission timers) more accurately, LL-TCP can issue each ACK with a delay equal to the setting of the local retransmission timer LT 150.

Without additional window granted, the right edge of FH's 100 windows is fixed at a position. The FH's usable window is gradually closed since FH 100 continues to send segments within the usable window, which makes SND.NXT keep moving to the right. With receptions of ACKs, the FH's 100 window is also gradually closed since SND.UNA is moving toward SND. UNA + SND.WND. On the other side, without granting additional window, the right edge of LL-TCP's windows (at SH 120) is also fixed at a position. LL-TCP is closing its window from the left edge by sending ACKs without granting any additional window to the FH 100. With the reception of incoming segments, LL-TCP is moving RCV.NXT towards RCV.NXT + RCV.WND.

Eventually the FH's 100 window size becomes 0. When a TCP sender's window size is 0, it moves into the persist mode. FH 100 will start a persist timer 180 (see Fig. 7) and wait for its window to become nonzero (i.e., opened by the receiver SH 120). Since its window size is 0, the FH 100 stops transmitting data. In addition, while in the persist mode, the FH's 100 retransmission timers are stopped.

If the sender (i.e., FH 100) does not receive a window update when the persist timer expires, it sends a window probe to the receiver (i.e., SH 120) to see if a window update (i.e., an ACK with offered window size greater than 0) sent by the SH 120 has been lost as ACKs are unreliable. Since LL-TCP at the SH 120 will not respond to the window probes sent by the FH 100 (until the MH 110 is reconnected), the persist timer at FH 100 will time out again and again. The exponential backoff process is applied to the persist timer 180. The FH 100 never gives up sending window probes until the arrival of a window update.

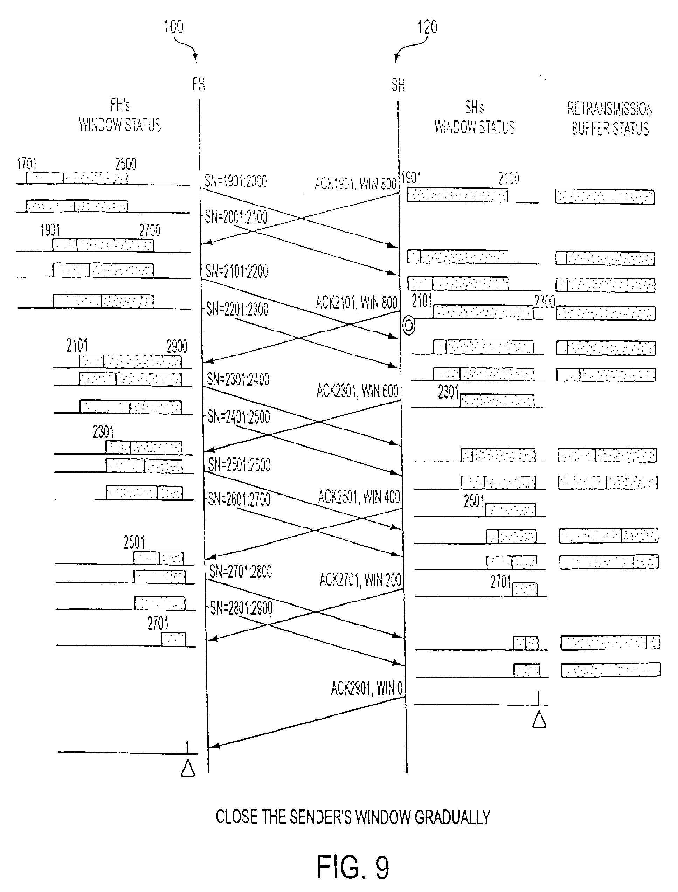

Figure 9 shows an example of such approach (compare to Figure 5). A temporary disconnection happens after the SH 120 forwards the acknowledgement (ack = 2101, win = 800) to the FH 100. LL-TCP at the SH 120 then acknowledges, on behalf of the disconnected MH 110, every other incoming segment from the FH 100. In each status bar, the light-shaded block shows the occupied space and the dark-shaded block represents the available space. The SH's 120 window status is actually the window status of LL-TCP.

**The Fast Resumption Operation**

When the MH 110 is reconnected, the sender (i.e., FH 100) should be allowed to start sending data segments as quickly as possible with its original speed. The way of achieving this is to reopen the FH's 100 window to its full size quickly. How fast FH's 100 window can be reopened depends on how fast the window of LL-TCP at the SH 120 (i.e., the simulated window of the receiver MH 110) can be increased, which in turn depends on how fast the buffered segments can be sent to and acknowledged by the MH 110.

Actions of SH

LL-TCP at the SH 120 monitors the status of the retransmission buffer 140. The reopen timer RT 170 is used to control the reopening of the FH's 100 window. The first window update sent from LL-TCP to the FH 100 is a duplicate acknowledgement (DUPACK) of the last segment received (and buffered) by LL-TCP. The DUPAK contains an offered window corresponding to the availability of the retransmission buffer RET 140. LL-TCP sends this first window update when either the reopen timer RT 170 times out or the retransmission buffer RET 140 becomes empty.

Suppose that $ERTTW(n)$ is an estimated round-trip time on wireless link for $n$ segments and $RBSEG$ is the number of segments in the retransmission buffer RET 140. Depending on the setting of reopen timer RT 170 and the condition of wireless link, the FH's 100 window will be reopened in different patterns:

> 1. $RT \geq ERTTW(RBSEG)$
> Reopen timer RT 170 is set to a value greater than the estimated time needed to clear the retransmission buffer RET 140, i.e., all buffered segments are forwarded to and acknowledged by the MH 110. If everything is working fine on wireless link after the MH 110 is reconnected, then the FH's 100 window will be reopened to its full size at once, since a DUPACK with a window update of full size will be sent when the retransmission buffer RET 140 becomes empty. If the reopen timer RT 170 expires before the retransmission buffer RET 140 becomes empty, then the FH's 100 window will not be reopened to its full size at the first window update.

> 2. $RT < ERTTW(RBSEG)$
> Reopen timer RT 170 is set to a value smaller than the estimated time needed to clear the retransmission buffer RET 140. If everything is working fine on wireless link after the MH 110 is reconnected, then the FH's 100 window will be reopened to its full size gradually. Suppose that the reopen timer RT 170 is set as the estimated time to clear 1/3 of the retransmission buffer RET 140, i.e., $R = ERTTW(RBSEG)/3$. Then, the FH's 100 window will be reopened gradually in three times (i.e., roughly 1/3, 2/3, and full size). Since there will be three time-outs on the reopen timer RT 170 and a DUPACK offering a window greater than the previous one will be sent to the FH 100 on each time-out.

The advantage of the first type of setting is that the FH's 100 window can be reopened close to or at its full size at one time and thus can start transmitting data with full speed (i.e., a high data transmission rate). Its disadvantage is that the MH 110 will experience a long communication delay after receiving all buffered segments from LL-TCP. The delay is the round-trip time of the wired link, i.e., the time needed to send the window update from the SH 120 to the FH 100 plus the time needed to send the first new data segment from the FH 100 to the SH 120. If, unfortunately, the first window update is lost on the way to the FH 100, then the delay will be longer. LL-TCP at the SH 120 will wait until either it receives the window probe from the FH 100 to realize that FH 100 does not get the window update or RT expires again. In either case, LL-TCP resends the window update again.

The advantage of setting a smaller reopen timer RT 170, the second type of setting, is that the FH's 100 window can be reopened (to a size smaller than full size) more quickly and thus the FH 100 is able to start transmitting data earlier than that of a bigger reopen timer RT 170. Another advantage of using a smaller reopen timer RT 170 is that MH 110 may experience a shorter communication delay waiting for the arrival of new segments from the FH 100. The disadvantage of using a smaller RT 170 is that the FH 100 may not be able to get to its full transmission speed quickly.

The advantage of the first type of setting over the second is that the resumption operation may end quicker, since the resumption operation ends when LL-TCP at the SH 120 receives the first incoming segment from the FH 100 while the retransmission buffer RET 140 is empty. If a smaller reopen timer RT 170 is used, then the situation of *half-opened windows* (explained later) may occur, which may delay the ending of the resumption operation.

## Actions of FH

Upon receiving a DUPACK with window update, the FH 100 exits the persist mode and starts transmitting data again. Even if the reopen timer RT 170 is set to a small value, the FH's 100 window will grow back to its original size very fast (much faster than slow start) because the FH 100 will receive several window updates (each one offering a bigger window than its previous one) within a short period of time. In a preferred embodiment, this short period of time equals the time LL-TCP needs to clear the retransmission buffer RET 140 plus the time needed to send the last window update from the SH 120 to the FH 100.

## Half-Opened Windows

If new segments from the FH 100 arrive before LL-TCP clears the retransmission buffer RET 140, LL-TCP puts the incoming segments in the retransmission buffer RET 140 without passing it to the routing code, so that they can be forwarded as other buffered segments to the MH 110 in order. LL-TCP does not acknowledges these incoming segments on behalf of the MH 110 since the MH 110 is reconnected already.
The above actions are also applied in the case that the MH 110 is temporarily disconnected for a short period of time and the windows of the FH 100 and LL-TCP are not completely closed when the MH 110 is reconnected.

## End of the Resumption Operation

The resumption operation ends when LL-TCP has sent all the buffered packets to the MH 110 and received acknowledgements from the MH 110. LL-TCP restarts its normal operation mode as described in section entitled "normal operation."

## Summary of the Suspension and Resumption Operations

LL-TCP suspension operation:

1. A MH 110 is temporarily disconnected.
2. The suspension timer ST 160 of LL-TCP at SH 120 times out (in hundred of milliseconds perhaps) on a TCP segment sent by SH 120 to the MH 110.
3. LL-TCP invokes the suspension operation on FH 100 (i.e., the sender) by not granting anymore windows to the sender.
4. FH 100 keeps transmitting TCP segments within its (usable) window.
5. LL-TCP receives a TCP segments sent by FH 100, stores it in the retransmission buffer RET 140, and then acknowledges FH 100 without granting anymore window to it.
6. The steps 4 and 5 repeat, until FH 100 has sent out all segments in its (usable) window. At this point, FH's 100 window size becomes 0 and it stops transmitting data.
7. FH 100 moves into the persist mode, starts the persist timer 180, and waits for its window to become nonzero (i.e., opened by LL-TCP).

LL-TCP resumption operation:

1. The MH 110 regains its communication and resends the last ACK to the sender.
2. When receiving the ACK (duplicate or not) from the MH 110, LL-TCP knows that the MH 110 is reconnected. It does not forward the ACK to the FH 100 but just starts the resumption operation by forwarding all buffered TCP segments to the MH 110.
3. The MH 110 acknowledges each TCP segment when receiving it.
4. LL-TCP sends out a window update (through a DUPACK of the last buffered segment when the MH 110 is disconnected) when the reopen timer RT 170 expires or the retransmission buffer RET 140 becomes empty. The offered window size reflects the availability of the retransmission buffer RET 140 and the advertised windows of the MH 110 indicated in ACKs from the MH 110.
5. The FH 100 receives the window update, exits the persist mode, reopens its window to the offered size, and then start transmitting data to the MH 110 (actually the SH 120).
6. LL-TCP at the SH 120 may be busy in buffering the incoming segments (from the FH 100) to and clearing the buffered segments (when they are forwarded to and then acknowledged by the MH 110) from the retransmission buffer RET 140 for a period of time. During the time, LL-TCP may send more window updates to the FH 100.
7. Resumption operation ends when either the first incoming segments from the FH 100 arrives while the retransmission buffer RET 140 is empty or the retransmission buffer RET 140 contains less than two segments just arrived from FH 100.

Two reasons LL-TCP is an improvement over M-TCP is because:

**1.** LL-TCP complies with the requirement of IETF RFC 1122 (section 4.2.2.16).
**2.** LL-TCP does not require any changes at the fixed host.

## Use of Internet Control Message Protocol Packets

Internet Control Message Protocol Packets can be used to define a mechanism which both allows the mobile host 110 to detect a link failure and by which the supervisor host 120 can inform the fixed host 100 of the link failure. The basic mechanism of the Internet Control Message Protocol (ICMP) relies on the fact that TCP traffic from fixed hosts 100 to mobile hosts 110 is monitored. ICMP packets are used to suspend and resume data transfer activities. (ICMP is a network layer protocol that allows end systems to report on error conditions and to provide information about unexpected circumstances. ICMP packets travel through an internet in the form of IP datagrams. Fields in the header information of an IP datagram identify a packet as being an ICMP packet).

Many times, the mobile host 110 does not have any means to detect a link failure. Although most of the wireless technologies have a link-layer monitoring the status of the link, more often than not the information is not brought up to the transport layer. The present invention comprises a method and apparatus which enables the mobile host 110 to detect a link failure.

Since TCP can not determine why a sent or transmitted packet has not yet been acknowledged, the mobile host 110 probes the link. It periodically tests the link by sending an ICMP probe request to the supervisor host 120. If the mobile receives a response from the supervisor host 120, TCP connections are kept.

On the other hand, if at a timer expiration, the mobile host 110 has not received a response from the supervisor host 120, TCP connections are suspended. In the meantime, the mobile host will keep probing the link to determine when activity can be resumed.

The supervisor host 120 uses the suspension timer 160 described in LL-TCP to detect a link failure. When the suspension timer 160 expires, the supervisor host 120 sends an ICMP suspend request to the fixed host 100. A response from the fixed host 100 means that the connection is now idle. On the other hand, if, after several attempts, the supervisor host 120 does not receive a response from the fixed host 100, it decides that the fixed host 100 does not support the functionality and sends an ICMP destination unreachable message to the fixed host 100.

When the supervisor host 120 receives a probe request from a mobile host 110, it determines that the link is now operational and that the connection can be resumed. The supervisor host sends an ICMP probe response message to the mobile host. As a result, the connection is resumed with the same characteristics as prior to the link failure.

A description of the behavior of each element (mobile host 110, supervisor host 120 and fixed host 100) follows. The present invention provides roaming capacity to the mobile host. Consequently, the mobile host can regain connectivity in another area (i.e., under the coverage of another supervisor host 120). In addition, the mobile host 110 may be connected to another network implying the use of Mobile IP, Charles Perkins, Ipv4 Mobility Support, October 1996, hereby incorporated by reference.

### The mobile host behavior

### Link Layer event not available

The mobile host 110 implements the TCP protocol as described in IETF RFC 793, Transmission Control Protocol, September 1981, hereby incorporated by reference and IETF RFC 813, Window and Acknowledgement Strategy in TCP, 1982, hereby incorporated by reference. Furthermore, in a preferred embodiment, the mobile host 110 implements recommendations emerging from the PILC working group, Performance Implications of Link Characteristics, IETF working group, April 2000, hereby incorporated by reference. The method described in this section is implemented by the mobile host 110 when the mobile host 110 cannot be informed by underlying layers of the new status of the wireless link.

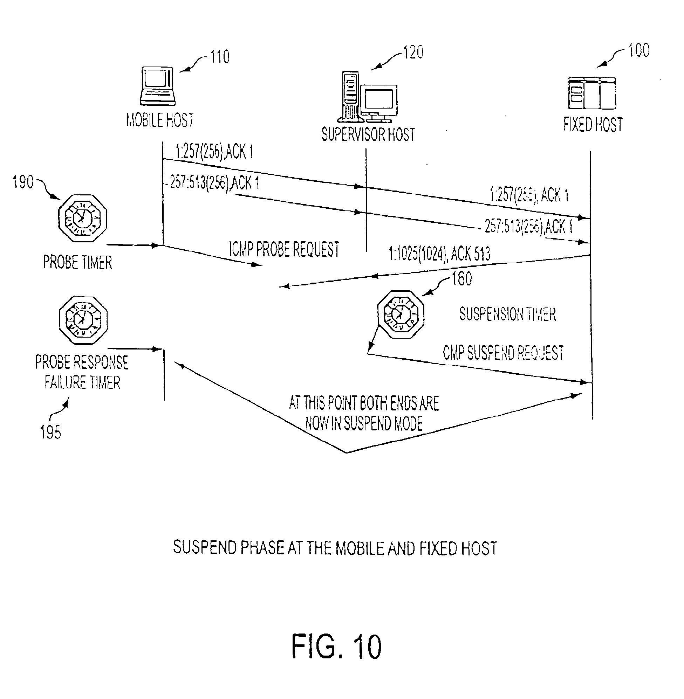

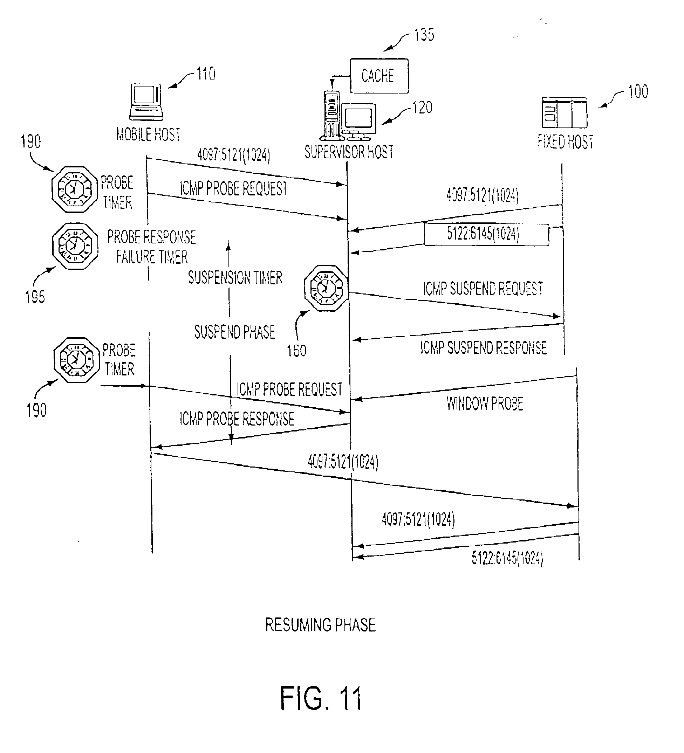

1. The mobile host 110 periodically sends an ICMP probe request to the supervisor host 120 (see Fig. 10). The ICMP probe request is sent to all routers on the network (e.g. multicast address 224.0.0.2), thus allowing the mobile host to roam from one point of attachment to another. Furthermore, the mobile host 110 sets a probe response failure timer 195 (see Fig. 11). (The probe response failure timer 195 should be set to reflect the worst round-trip delay conceivable between the mobile host 110 and the supervisor host 120). The mobile host sets a probe timer 190 to trigger subsequent emissions of the ICMP probe request.

2. If prior to the expiration of the probe response failure timer 195, the mobile host receives a response to the ICMP probe request (i.e., the ICMP probe response), the mobile host determines that it can keep on sending TCP segments. The mobile host then cancels the probe response failure timer 195.

3. If the ICMP probe response is not received from supervisor host 120 at the expiration of the probe response failure timer 195, the mobile host 110 determines that the link between itself and the supervisor host 120 has been disrupted (or is broken). Consequently, the mobile host 110 puts the TCP connections into the suspend mode (see Fig. 10). In the suspend mode, the TCP connection does not send packets and disables all pending timers.

4. While operating in the suspend mode, the mobile host 110 monitors link status changes by periodically sending ICMP probe requests to the supervisor host 120. The mobile host 110 continues probing the supervisor host 120 (step 1) because it does not receive link status updates from an underlying layer.

5. When connectivity is regained, the mobile host 110 will receive a response (i.e. ICMP probe response) to its ICMP probe request (see Fig. 11). The mobile host 110 then resumes all TCP connections' activity.

6. If the mobile host 110 receives an ICMP probe response after the probe response failure timer 195 expires, the mobile host resumes all TCP connections' activity. The mobile host 110 adjusts the probe response failure timer 195 to take into account transmission degradation in the wireless link by keeping track of the time when the ICMP probe request message was sent. The mobile host 110 can adjust the timer value if the request identifier and the response identifier match.

**Link layer event available**

When the transport layer is informed of the status of the wireless link by the link layer, the method of probing the supervisor host 120 by periodically sending ICMP probe request packets described in the previous section is not required. When informed of a disconnect by the link layer, the mobile host 110 suspends all connections, either TCP connections or UDP sessions. When the mobile host 110 is informed by the link layer that the link between it and the fixed host 100 is back, the mobile host 110 resumes activity on all suspended connections.

**The supervisor host behavior**

**Link layer event not available**

The supervisor host 120 monitors TCP traffic from the fixed host 100 to the mobile host 110 by keeping track of the TCP segments sent in both directions. For each TCP segment sent from the fixed host 100 to the mobile host 110, a copy of the IP header and the first 8 bytes of the TCP header is stored in a cache 135 and a suspension timer 160 is launched. If the supervisor host 120 receives from the mobile host 110 an acknowledgement, the suspension timer 160 is canceled and the TCP segment (eventually several TCP segments) is (are) removed from the cache 135. Otherwise, the supervisor host 120 applies the suspend and resume operations as described in the following paragraphs 1-5.

In a preferred embodiment, the supervisor host 120 uses the suspension timer 160 to alert the fixed node 100 of the new status of the wireless link. This behavior is described in M. Yang, Another Solution of Long-Lived TCP Connection in Wireless Mobile Communication, June 99 (ref: 8DB 00304 0064 QRZZA), hereby incorporated by reference.

1. If the supervisor host 120 receives an ICMP probe request from the mobile host 110, it immediately responds with an ICMP probe response (see Fig. 11). The ICMP probe response is send to the unicast address of the request senders' address. The identifier is copied from the ICMP probe request message.

2. When the supervisor host 120 is informed of the link failure (i.e. at the expiration of the suspension timer 160), the supervisor host 120 initiates the suspend phase. In the suspend phase, the supervisor host 120 discards packets it receives which were sent by the fixed host 100 to the mobile host 110 and sends an ICMP suspend request to the fixed host 100 (see Fig. 10). (The ICMP suspend request is send to the fixed host's IP address). The ICMP suspend request includes the IP header and the first 8 bytes of the TCP header of the first unacknowledged segment. The information included in the ICMP suspend request is taken from the packet that triggered the suspension timer 160. This information is needed to dispatch the ICMP suspend request at the destination.

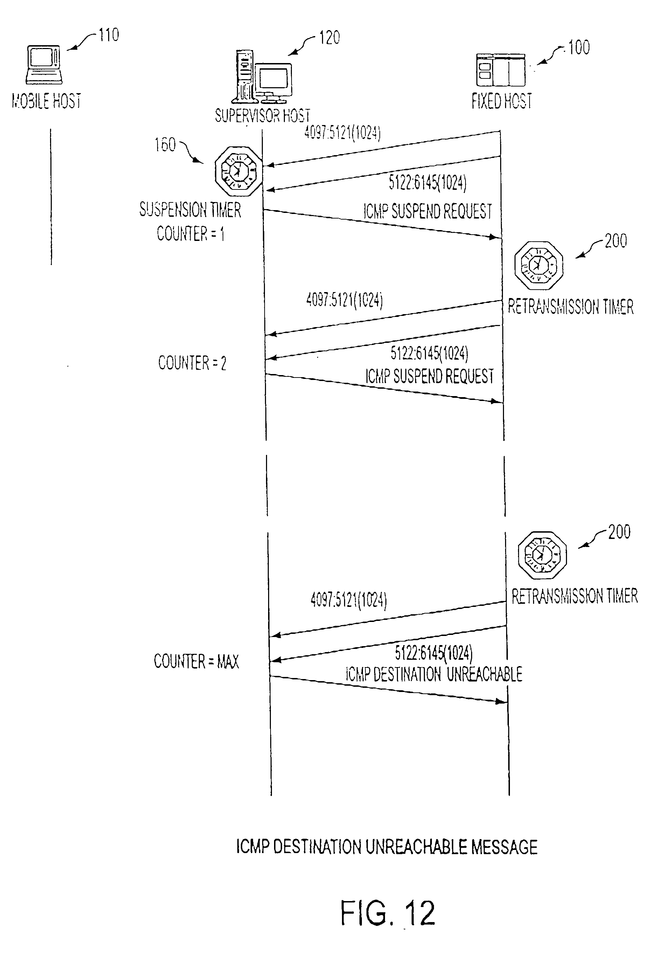

3. If the fixed host 100 keeps on transmitting segments to the mobile host 110, the supervisor host 120 replies to each segment with an ICMP suspend request. The identifier remains the same. After at least one retransmission, the supervisor host 120 will send an ICMP destination unreachable message to the fixed host 100 (see Fig. 12). (In a preferred embodiment, the supervisor host 120 will send an ICMP destination unreachable message after 10 retransmissions). In addition, it closes the connection.

4. If the supervisor host receives an ICMP suspend response from the fixed host which contains the same identifier, the supervisor host will not send any more ICMP suspend requests.

5. If during the suspend mode, the supervisor host 120 receives an ICMP probe message from a mobile host 110, the supervisor host 120 will send an ICMP probe response to the mobile host 110.

**Link layer event available**

If the supervisor host 120 can rely on a link layer event to send ICMP suspend request message to the fixed host 100, then the supervisor host 120 will not implement the suspension timer 160 as described in the previous section.

Upon reception of an event indicating that the wireless link is broken, the supervisor host 120 will send an ICMP suspend request to the fixed host 100 whenever it is attempting to send a packet to a mobile host 110. At this point the supervisor host 120 applies the various items described infra.

Figure 11 depicts the behavior that can take place during the resume phase.

**The fixed host behavior**

1. Upon receiving an ICMP suspend request, the fixed host 100 transfers the TCP connections from regular mode to suspend mode. In this mode, the fixed host 100 does not send any more packets. In addition, all timers are canceled, thereby avoiding any back-off algorithms. Furthermore, the fixed host 100 sends an ICMP suspend response to the supervisor host 120. In a preferred embodiment, the suspend response includes the identifier given by the supervisor host 120 in the ICMP suspend request.

2. If the fixed host 100 receives multiple ICMP suspend requests, the fixed host 100 sends an ICMP suspend response in response to each of the ICMP suspend requests. This is needed since the first response may have been lost.

3. Since there might be situation where only the fixed host 100 has some data to transfer, the fixed host 100 uses the persist timer 180 and window probe message to detect connectivity's regain.

**Protocol Description**

The following are the definitions of the ICMP messages created to suspend or resume the TCP connection and the message sent to probe the supervisor host 120.

**ICMP Suspend Messages**

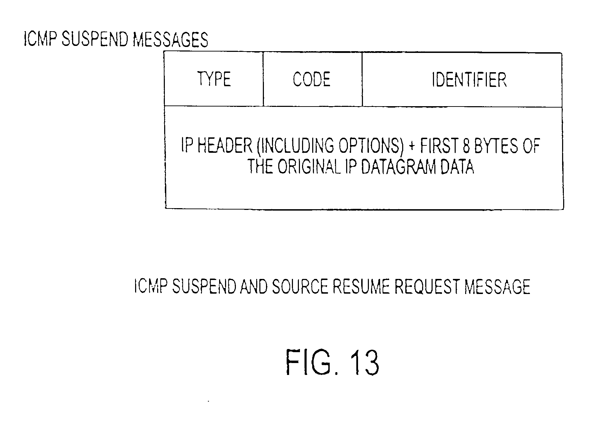

Figure 13 is the format for the ICMP suspend request message.
The type field is 20 and 21 for suspend request and suspend response (identifier to be assigned by authorized authority).
Code is unused and can be set to 0.
The identifier matches the request and the response.
The IP header and the 64 bits of the data payload are used by the host to match the message to the appropriate process. If a higher level protocol uses port numbers, they are assumed to be in the first 64 data bits of the original payload. This field is not present in the response.

**ICMP Probe Messages**

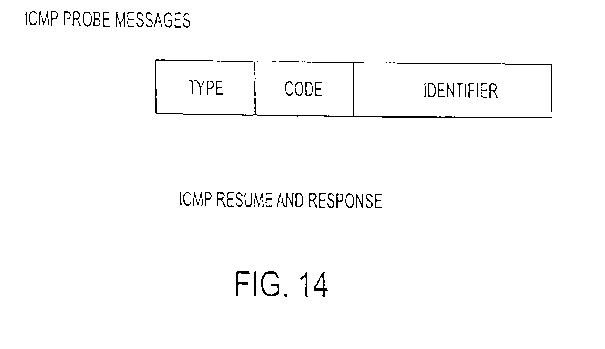

Figure 14 is the format for the ICMP probe request and response.
The type field may be 22 and 23 for probe request and probe response (identifier to be assigned by authorized authority)

Code is unused and is set to 0.

Identifier aids in matching the requests and the replies.

While the invention has been disclosed in this patent application by reference to the details of preferred embodiments of the invention, it is to be understood that the disclosure is intended in an illustrative rather than in a limiting sense, as it is contemplated that modification will readily occur to those skilled in the art, within the spirit of the invention and the scope of the appended claims and their equivalents.

**Claims**

1.  A method of improving performance in data communication, comprising:

    detecting a link disconnect;
    fast suspending transfer of data by closing a sending host's flow control window gradually to zero; and
    fast resuming said transfer of data when said link is reconnected.

2.  The method according to claim 1, wherein said step of closing the sending host's flow control window gradually to zero further comprises the steps of:

    transmitting remaining data in said sending host's flow control window;
    storing said remaining data in a retransmission buffer at a supervisor host; and
    acknowledging incoming data without granting additional window size.

3.  The method according to claim 1, wherein said step of closing said sending host's flow control window gradually to zero further comprises the step of closing said sending host's window from its left window edge by allowing said sending host to transmit remaining data segments within its current window.

4.  The method according to claim 1, wherein said step of fast resuming comprises:

    detecting reconnection of said link;
    sending a duplicate acknowledgement of a last segment received and buffered to said sending host; and
    updating said flow control window of said sending host by offering a greater window size.

5.  The method according to claim 1, wherein said step of detecting a link disconnect comprises detecting the expiration of a suspension timer.

6.  The method according to claim 1, wherein said data segments comprise at least one TCP segment.

7.  The method according to claim 2, wherein said step of fast suspending data transfer further comprises:

    moving said sending host into a persist mode by starting a persist timer;
    stopping at least one retransmission timer; and
    waiting for said sending host's window to become nonzero.

8.  The method according to claim 2, wherein said sending host is a fixed host.

9.  The method according to claim 4, wherein said receiving host is a mobile host.

10. The method according to claim 4, wherein said step of updating said flow control window occurs when at least one reopen timer times out.

11. The method according to claim 4, wherein said step of updating said flow control window occurs when a retransmission buffer becomes empty.

12. A method of improving performance in wireless mobile communications, comprising:

    detecting a link failure by detecting the expiration of a suspension timer;
    suspending transfer of data segments by closing a fixed host's flow control window gradually to zero by:

        closing said fixed host's flow control window from its left window edge by allowing said fixed host to transmit remaining of said data segments within said flow control window;
        storing said remaining data segments in a retransmission buffer at a supervisor host; and
        acknowledging an incoming data segment without granting additional window size; and

    resuming said transfer of said data segments when said link is reconnected comprising the steps of:

        detecting reconnection of said link;
        sending a duplicate acknowledgement of a last segment received and buffered to said fixed host; and
        updating said flow control window of said fixed host by offering a greater window size.

13. The method according to claim 12, wherein said data segments comprise at least one transport layer segment.

14. The method according to claim 12, wherein said data segments comprise at least one TCP segment.

15. A method for suspending and resuming operation on a TCP connection between a fixed host and a mobile host, comprising:

   suspending a TCP operation, comprising the steps of:

      timing out a suspension timer on a TCP segment sent by a supervisor host to the mobile host;
      invoking a suspension operation on the fixed host by not granting anymore windows to the fixed host;
      transmitting remaining TCP segments within the fixed host's window;
      receiving and storing said remaining TCP segments sent by the fixed host in a retransmission buffer;
      acknowledging the fixed host without granting anymore window to it; and
      starting a persist timer and waiting for the fixed host's window to become nonzero; and

   resuming TCP operation, comprising the steps of:

      detecting reconnection of a link;
      reconnecting the mobile host;
      resending the mobile host's last acknowledgement to the fixed host;
      forwarding all of said stored TCP segments to the mobile host;
      acknowledging each of said TCP segments when the mobile host receives each of said TCP segments;
      sending out at least one window update to the fixed host when a reopen timer expires or a retransmission buffer becomes empty;
      receiving said window update by the fixed host, wherein the fixed host exits the persist mode, reopens its window to an offered size, and transmits data; and
      ending said resuming operation when either the first incoming segments from the fixed host arrives while said retransmission buffer is empty or when said retransmission buffer contains less than two segments.

16. A system for suspending and resuming communication, comprising:

   a sending host;
   a supervisor host operably connected to said sending host, comprising:

      a processor;
      a retransmission buffer operably connected to said processor, whereby data segments are stored; and
      a local retransmission timer operably connected to said processor; and a receiving host operably connected to said supervisor host.

17. The system according to claim 16, wherein said supervisor host further comprises a suspension timer operably connected to said processor to decide the start of a suspension operation.

18. The system according to claim 17, wherein said supervisor host further comprises a reopen timer operably connected to said processor to control the reopening of a window of said fixed host.

19. The system according to claim 16, wherein said supervisor host is a mobile switching station.

20. The system according to claim 16, wherein said receiving host is operably connected to said supervisor host via a wireless link.

21. The system according to claim 16, wherein said sending host is a fixed host.

22. The system according to claim 16, wherein said supervisor host is a mobile switching center comprising a suspension timer operably connected to said local retransmission timer to decide the start of a suspension operation and a reopen timer operably connected to said local retransmission timer to control the reopening of a window of said sending host;
   wherein said receiving host is operably connected to said supervisor host via a wireless link; and
   wherein said sending host is a fixed host comprising a persist timer.

23. The system according to claim 16, wherein at least one of said data segments is a TCP segment.

24. The system according to claim 16, wherein said sending host comprises a persist timer.

25. The system according to claim 22, wherein at least one of said data segments is a TCP segment.

26. A cellular communication system for suspending and resuming operation on a TCP connection, comprising:

a fixed host, comprising:

a persist timer;

a mobile switching station operably connected to the fixed host, comprising:

a processor;
a retransmission buffer operably connected to said processor, whereby TCP segments are stored;
a local retransmission timer operably connected to said processor;
a suspension timer operably connected to said processor to decide the start of a suspension operation; and
a reopen timer operably connected to said local processor to control the reopening of a window of said fixed host; and a mobile host operably connected via a wireless link to said mobile switching station.

27. A method of fast suspending data transfer, comprising:

sending at least one probe request;
detecting a link disconnect; and
launching a probe timer.

28. The method according to claim 27, wherein said step of detecting a link disconnect comprises detecting the expiration of a probe response failure timer.

29. The method according to claim 27, wherein said step of fast suspending further comprises:

putting at least one connection into a suspend mode; and
disabling at least one timer.

30. The method according to claim 27, wherein said step of fast suspending further comprises:

receiving at least one probe response; and
resuming at least one activity.

31. The method according to claim 27, wherein said step of fast suspending further comprises sending at least one suspend request.

32. The method according to claim 29, wherein said step of fast suspending further comprises monitoring link status changes by periodically sending additional said at least one probe request.

33. The method according to claim 31, wherein said step of sending at least one probe request occurs when a probe response failure timer expires and wherein said step of sending at least one suspend request occurs when a suspension timer expires.

34. The method according to claim 31, wherein said step of fast suspending further comprises sending at least one unreachable host message after a plurality of said at least one suspend request have been sent.

35. The method according to claim 31, wherein said step of fast suspending further comprises:

sending a suspend response; and
ceasing the step of sending said at least one suspend request.

36. The method according to claim 31, wherein at least one of said probe request, or said suspend request is an ICMP packet.

37. The method of fast suspending data transfer according to claim 31, further comprising the steps of:

fast suspending transfer of data segments by closing a fixed host's flow control window gradually to zero by:

transmitting remaining of said data segments in said fixed host's flow control window by closing said fixed host's window from its left window edge by allowing said fixed host to transmit remaining of said data segments within its current window;
storing said remaining data segments in a retransmission buffer at a supervisor host; and
acknowledging any incoming data segments without granting additional window size.

38. The method of fast suspending data transfer according to claim 37, wherein at least one of said data segments is a TCP segment.

39. A method of fast suspending data transfer, comprising:

sending at least one probe request from a mobile host to a supervisor host;
detecting a link connect by detecting the expiration of a probe response failure timer; launching a probe timer;
putting at least one connection into a suspend mode;
disabling at least one timer; and

sending at least one suspend request from said supervisor host to a fixed host when a suspension timer expires.

40. The method according to claim 39, wherein said step of fast suspending further comprises sending at least one unreachable host message from said supervisor host to said fixed host after a plurality of said suspend requests have been sent.

41. The method according to claim 39, wherein said step of fast suspending further comprises:

sending a suspend response to said supervisor host by said fixed host; and
stopping from sending any more of said at least one suspend request from said supervisor host.

42. The method according to claim 39, wherein said step of fast suspending further comprises monitoring link status changes by periodically sending additional said probe requests.

43. The method according to claim 39, wherein said step of fast suspending further comprises:

receiving at least one probe response; and
resuming at least one activity.

44. The method according to claim 39, wherein at least one of said probe request, or said suspend request is an ICMP packet.

45. The method of fast suspending data transfer according to claim 44, further comprising the steps of:

fast suspending transfer of TCP data segments by closing said fixed host's flow control window gradually to zero by:
transmitting remaining of said TCP data segments in said fixed host's flow control window by closing said fixed host's window from its left window edge by allowing said fixed host to transmit remaining of said TCP data segments within its current window;
storing said remaining TCP data segments in a retransmission buffer at said
supervisor host; and
acknowledging any incoming TCP data segments without granting additional window size.

46. A system for suspending and resuming a communication link between a mobile host and a fixed host, comprising:

said mobile host, comprising;

a probe timer to trigger the emission of at least one probe request; and
a probe response failure timer to inform said mobile host of a link disconnect; a supervisor host operably connected to said mobile host, said supervisor host having:
a suspension timer to decide the start of a suspension operation; and said fixed host operably connected to said supervisor host.

47. The system for suspending and resuming communication according to claim 46, wherein said fixed host further comprises:

a persist timer; and
said mobile host further comprises:

a processor;
a retransmission buffer operably connected to said processor, whereby data segments are stored;
a local retransmission timer operably connected to said processor; and
a reopen timer operably connected to said processor to control the reopening of a window of said fixed host.

48. The system according to claim 47, wherein said data segments are TCP segments and said at least one probe request is an ICMP packet.

FIG. 1
(PRIOR ART)

TCP FLOW CONTROL MECHANISM

THE SNOOP PROTOCOL

FIG. 2
(PRIOR ART)

INTERNET

FIXED HOST     SUPERVISOR HOST     MOBILE HOST

TCP     M-TCP

SH-TCP ⟷ M-TCP

THE M-TCP CONNECTION

FIG. 3
(PRIOR ART)

DATA SENT

CURRENT WINDOW

USABLE WINDOW

UNACKNOWLEDGED DATA

PERMITTED DATA TRANSMISSION

ACKNOWLEDGED DATA

ISN　　　　　　　　　SND.UNA　　　　SND.NXT　　　　　　SND.UNA
　　　　　　　　　　　　　　　　　　　　　　　　　　　　　+
　　　　　　　　　　　　　　　　　　　　　　　　　　　　　SND.WND

SEND SEQUENCE SPACE

TCP FLOW CONTROL

# FIG. 4A
(PRIOR ART)

DATA RECEIVED

ADVERTIZED (OFFERED) WINDOW

DATA RECEIVED AND
ACKNOWLEDGED

DATA RECEIVED BUT NOT YET
ACKNOWLEDGED

PERMITTED DATA
TRANSMISSION

ISN　　　　　　　　　　　　　　　　　RCV.NXT　　　　　RCV.NXT
　　　　　　　　　　　　　　　　　　　　　　　　　　　+
　　　　　　　　　　　　　　　　　　　　　　　　　　　RCV.WND

RECEIVE SEQUENCE SPACE
TCP FLOW CONTROL

# FIG. 4B
(PRIOR ART)

ACKNOWLEDGED DATA     UNACKNOWLEDGED DATA     PREVIOUSLY PERMITTED DATA TRANSMISSION

ISN     SND.UNA     SND.NXT     SND.UNA
△
    SND.WND

SEND SEQUENCE SPACE
SUDDEN CLOSE OF THE SENDER'S WINDOW

# FIG. 5A
(PRIOR ART)

DATA RECEIVED AND ACKNOWLEDGED     DATA RECEIVED BUT NOT YET ACKNOWLEDGED     PREVIOUSLY PERMITTED DATA TRANSMISSION

ISN     RCV.NXT     RCV.NXT
△     +
    RCV.WND

RECEIVE SEQUENCE SPACE
SUDDEN CLOSE OF THE SENDER'S WINDOW

# FIG. 5B
(PRIOR ART)

EXAMPLE OF CLOSING THE SENDER'S WINDOW SUDDENLY

# FIG. 6
(PRIOR ART)

LL-TCP ARCHITECTURE

FIG. 7

EP 1 278 348 A1

NORMAL OPERATION OF LL-TCP

FIG. 8

CLOSE THE SENDER'S WINDOW GRADUALLY

FIG. 9

SUSPEND PHASE AT THE MOBILE AND FIXED HOST

FIG. 10

FIG. 11

ICMP DESTINATION UNREACHABLE MESSAGE

FIG. 12

ICMP SUSPEND MESSAGES

| TYPE | CODE | IDENTIFIER |
|------|------|------------|
| IP HEADER (INCLUDING OPTIONS) + FIRST 8 BYTES OF THE ORIGINAL IP DATAGRAM DATA | | |

ICMP SUSPEND AND SOURCE RESUME REQUEST MESSAGE

# FIG. 13

ICMP PROBE MESSAGES

| TYPE | CODE | IDENTIFIER |
|------|------|------------|

ICMP RESUME AND RESPONSE

# FIG. 14

EP 1 278 348 A1

## EUROPEAN SEARCH REPORT

**European Patent Office**

**Application Number**

EP 01 11 7279

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 76139 A (BERGENWALL MARTIN ;NOKIA NETWORKS OY (FI)) 14 December 2000 (2000-12-14) * page 1, line 15 - page 4, line 4 * * page 6, line 21 - page 9, line 22 * * figures 1,2 * | 1-11 | H04L29/06 H04L12/56 H04Q7/22 |
| X | W. RICHARD STEVENS: "TCP/IP Illustrated Volume 1" 1994 , ADDISON WESLEY , MASSACHUSETTS XP002182881  1 section 22: TCP Persist Timer section 22.1: Introduction | 1,7 | |
| X | US 6 208 620 B1 (JOSHI ATUL SURESH  ET AL) 27 March 2001 (2001-03-27) | 12-14 | |
| Y | * column 1, line 14 - column 1, line 47 * * column 2, line 15 - column 3, line 26 * * column 3, line 39 - column 3, line 61 * * column 5, line 42 - column 7, line 49 * * column 9, line 29 - column 10, line 32 * * figure 2 * * abstract * | 37,45 | **TECHNICAL FIELDS SEARCHED** (Int.Cl.7) H04L H04Q |
| X | V. MAGRET, M. YANG: "Long-lived TCP connections" , INTERNET ENGINEERING TASK FORCE (IETF) INTERNET DRAFT XP002198355 draft-magret-pilc-lltcp-00.txt, Submitted to the PILC working group | 15 | |
| Y | * the whole document * | 36,44,48 | |
| X | US 6 212 175 B1 (HARSCH THOMAS B) 3 April 2001 (2001-04-03) | 16-26, 46,47 | |
| Y | * column 6, line 33 - column 13, line 3 * * figures 1-7 * * abstract * | 48 | |

-/--

The present search report has been drawn up for all claims

| Place of search | Date of completion of the search | Examiner |
|---|---|---|
| MUNICH | 8 May 2002 | Körbler, G |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

32

European Patent
Office

Application Number

EP 01 11 7279

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**EUROPEAN SEARCH REPORT**

Application Number

EP 01 11 7279

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | RATNAM K ET AL: "Effect of local retransmission at wireless access points on the round trip time estimation of TCP" SIMULATION SYMPOSIUM, 1998. PROCEEDINGS. 31ST ANNUAL BOSTON, MA, USA 5-9 APRIL 1998, LOS ALAMITOS, CA, USA, IEEE COMPUT. SOC, US, 5 April 1998 (1998-04-05), pages 150-156, XP010275542 ISBN: 0-8186-8418-6 * page 151, left-hand column, line 30 - page 151, right-hand column, line 13 * * page 152, right-hand column, line 15 - page 152, right-hand column, line 43 * * figure 1 * | 16-26, 46-48 | |
| A | WO 00 44147 A (ERICSSON TELEFON AB L M) 27 July 2000 (2000-07-27) * page 6, line 10 - page 6, line 30 * * page 9, line 31 - page 10, line 10 * * figures 3A,3B * | 16-26, 46-48 | |
| X | US 5 996 001 A (QUARLES STEPHANIE ET AL) 30 November 1999 (1999-11-30) | 27-45 | TECHNICAL FIELDS SEARCHED (Int.Cl.7) |
| Y | * column 10, line 20 - column 10, line 45 * * column 11, line 15 - column 11, line 64 * * figure 10 * | 36,37, 44,45 | |
| A | US 6 151 696 A (CATES KENNETH ET AL) 21 November 2000 (2000-11-21) * column 16, line 48 - column 20, line 46 * * abstract * | 27-45 | |

-/--

The present search report has been drawn up for all claims

| Place of search | Date of completion of the search | Examiner |
|---|---|---|
| MUNICH | 8 May 2002 | Körbler, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

| | | |
|---|---|---|
| **European Patent** **Office** | **LACK OF UNITY OF INVENTION** **SHEET B** | **Application Number** EP 01 11 7279 |

The Search Division considers that the present European patent application does not comply with the requirements of unity of invention and relates to several inventions or groups of inventions, namely:

1. Claims: 1-11

   A method of improving performance in data communication.

2. Claims: 12-14

   A method of improving performance in wireless mobile communications.

3. Claim : 15

   A method for suspending and resuming operation on a TCP connection between a fixed host and a mobile host.

4. Claims: 16-26, 46-48

   A system for suspending and resuming communication comprising a supervisor host.

5. Claims: 27-45

   A method of suspending a data transfer by sending at least one probe request.

European Patent Office

**EUROPEAN SEARCH REPORT**

Application Number

EP 01 11 7279

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SINHA P ET AL: "WTCP: A RELIABLE TRANSPORT PROTOCOL FOR WIRELESS WIDE-AREA NETWORKS" MOBICOM '99. PROCEEDINGS OF THE 5TH ANNUAL ACM/IEEE INTERNATIONAL CONFERENCE ON MOBILE COMPUTING AND NETWORKING. SEATTLE, WA, AUG. 15 - 20, 1999, ANNUAL ACM/IEEE INTERNATIONAL CONFERENCE ON MOBILE COMPUTING AND NETWORKING, NEW YORK, NY: ACM, US, vol. CONF. 5, 15 August 1999 (1999-08-15), pages 231-241, XP000896089 ISBN: 1-58113-142-9 * page 235, left-hand column, line 47 - page 235, right-hand column, line 33 * * page 237, left-hand column, line 14 - page 237, left-hand column, line 57 * | 27-45 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 8 May 2002 | Körbler, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 11 7279

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2002

| Patent document cited in search report | | | Publication date | Patent family member(s) | | Publication date |
|---|---|---|---|---|---|---|
| WO 0076139 | A | | 14-12-2000 | WO | 0076139 A1 | 14-12-2000 |
| | | | | AU | 4373799 A | 28-12-2000 |
| | | | | EP | 1186140 A1 | 13-03-2002 |
| US 6208620 | B1 | | 27-03-2001 | NONE | | |
| US 6212175 | B1 | | 03-04-2001 | NONE | | |
| WO 0044147 | A | | 27-07-2000 | AU | 2334700 A | 07-08-2000 |
| | | | | EP | 1145527 A1 | 17-10-2001 |
| | | | | WO | 0044147 A1 | 27-07-2000 |
| US 5996001 | A | | 30-11-1999 | NONE | | |
| US 6151696 | A | | 21-11-2000 | US | 5727002 A | 10-03-1998 |
| | | | | US | 5553083 A | 03-09-1996 |
| | | | | US | 5920701 A | 06-07-1999 |
| | | | | AT | 209411 T | 15-12-2001 |
| | | | | AU | 5295096 A | 07-08-1996 |
| | | | | DE | 69617204 D1 | 03-01-2002 |
| | | | | DK | 804838 T3 | 18-03-2002 |
| | | | | EP | 1128591 A2 | 29-08-2001 |
| | | | | EP | 0804838 A2 | 05-11-1997 |
| | | | | ES | 2163011 T3 | 16-01-2002 |
| | | | | JP | 10512726 T | 02-12-1998 |
| | | | | WO | 9622641 A2 | 25-07-1996 |

EPO FORM P0459

For more details about this annex : see Official Journal of the European Patent Office, No. 12/82